# EUROPÄISCHE PATENTSCHRIFT

(11) **EP 1 925 243 B1**
(45) Veröffentlichungstag und Bekanntmachung des Hinweises auf die Patenterteilung: **31.07.2013**
(21) Anmeldenummer: 07121321.9
(22) Anmeldetag: 22.11.2007
(51) Int. Cl.: A47J 31/36, A47J 31/46

(54) **Brüheinheit für eine Kaffeemaschine sowie Kaffeemaschine mit einer solchen Brüheinheit**
Brewing unit for a coffee machine and coffee machine with such a brewing unit
Unité d'échaudage pour une machine à café ainsi que machine à café dotée d'une telle unité d'échaudage

(30) Priorität: 25.11.2006 DE 202006017940 U
(43) Veröffentlichungstag der Anmeldung: 28.05.2008
(73) Patentinhaber: WIK Far East Ltd., Hong Kong (CN)
(72) Erfinder: Meuer, Jens Martin, 47269, Duisburg (DE)
(74) Vertreter: Haverkamp, Jens

(56) Entgegenhaltungen:
- EP-A- 1 532 903

## Beschreibung

Die Erfindung betrifft eine Brüheinheit für eine Kaffeemaschine mit einem Brühzylinder und zwei innerhalb des Brühzylinders in der Brühstellung der beweglichen Elemente der Brüheinheit eine Brühkammer begrenzenden Kolben, wobei einer der beiden Kolben einen Heißwasseraustritt zum Einbringen von Heißwasser in die Brühkammer und der andere einen Auslauf aufweist.

Eine Brüheinheit dieser Art ist aus EP 1 532 903 A1 bekannt.

Kaffeemaschinen, mit denen portionsweise, etwa tassenweise frisch gebrühter Kaffee bereitet werden kann, verfügen über eine Brüheinheit. Diese umfasst einen Brühzylinder, in den nach dem Starten eines Brühzyklus gemahlenes Kaffeepulver eingebracht, darin verdichtet und anschließend Heißwasser durchgeführt wird, bevor das ausgelaugte Kaffeemehl aus dem Brühzylinder ausgestoßen wird. Das in den Brühzylinder eingebrachte Kaffeepulver wird typischerweise in einem der Kaffeemaschine zugeordneten Mahlwerk aus Kaffeebohnen frisch gemahlen. Je nach Konzeption der Brüheinheit verfügt diese über zumindest zwei bewegliche Elemente, wobei es sich bei diesen um zwei gegeneinander bewegbare Kolben oder um einen Kolben und den Brühzylinder handeln kann. Es sind auch Brüheinheiten bekannt geworden, bei denen sowohl die beiden Kolben, als auch der Brühzylinder gegeneinander bewegbar sind. Typischerweise ist einer der beiden Kolben an eine Heißwasserzuführung angeschlossen und verfügt über einen Heißwasseraustritt, der zumeist hinter einer Siebplatte angeordnet ist. Derartige Brüheinheiten sind typischerweise aus der Kaffeemaschine herausnehmbar. Daher ist die der Brüheinheit zugeordnete Heißwasserzuführung an ein Kupplungsstück der Brüheinheit angeschlossen, welches bei in die Kaffeemaschine eingesetzter Brüheinheit mit einem der Kaffeemaschine zugeordneten komplementären Kupplungsstück verbunden ist. Ist der den Heißwasseraustritt ausweisende Kolben gegenüber dem das Kupplungsstück tragenden Gestell oder Rahmen bewegbar, muss die Heißwasserzuführung der Brüheinheit längenvariabel ausgestaltet sein.

Die Brüheinheit ist je nach Ausgestaltung der Kaffeemaschine in dieser in einer unterschiedlichen Raumlage angeordnet. Es gibt Kaffeemaschinen, bei denen die Brüheinheit vertikal oder annähernd vertikal ausgerichtet ist. Ferner sind Kaffeemaschinen bekannt, bei denen die Brüheinheit horizontal ausgerichtet angeordnet ist. Im Zusammenhang mit diesen Ausführungen ist die Ausrichtung der Brüheinheit bezogen auf die Durchtrittsrichtung des Wassers durch die Brühkammer von Interesse. In diesem Zusammenhang hat sich gezeigt, dass bei vertikal in der Kaffeemaschine angeordneten Brüheinheiten das in der Brühkammer befindliche Kaffeepulver zur Zubereitung eines Kaffeegetränkes bei dem Durchtritt des Heißwassers besser bezogen auf das Volumen des in der Brühkammer befindlichen Kaffeepulvers durchfeuchtet wird als dieses bei horizontal in der Kaffeemaschine angeordneten Brüheinheiten der Fall ist.

Ausgehend von diesem diskutierten Stand der Technik liegt der Erfindung daher die Aufgabe zugrunde, eine Brüheinheit der eingangs genannten Art dergestalt weiterzubilden, dass bei einer horizontalen Anordnung derselben in einer Kaffeemaschine die Durchfeuchtung des von in der Brühkammer befindlichen Kaffeepulvers verbessert ist.

Gelöst wird diese Aufgabe erfindungsgemäß durch eine Brüheinheit mit den Merkmalen des Anspruchs 1 sowie durch eine Kaffeemaschine mit einer solchen Brüheinheit gemäß den Merkmalen des Anspruchs 8.

Im Unterschied zu den Konzeptionen früherer Brüheinheiten, bei denen man bestrebt war, den Heißwassereintritt in die Brühkammer möglichst großflächig und damit über die gesamte Fläche des Kolbenbodens verteilt vorzusehen, hat sich gezeigt, dass eine erheblich bessere Durchfeuchtung des in der Brühkammer befindlichen Kaffeepulvers erfolgt, wenn, bezogen auf die Längsachse der Brühkammer sich der Heißwasseraustritt des einen Kolbens, über den das Heißwasser der Brühkammer zugeführt wird, und der Auslauf des anderen Kolbens bezogen auf die Querschnittsfläche der Brühkammer einander nicht in Längsrichtung der Brühkammer gegenüberliegen. Es hat sich gezeigt, dass eine besonders effektive Durchfeuchtung des Kaffeepulvers beim Brühen eines Kaffees eintritt, wenn sich bezogen auf den Durchmesser des Kolbenbodens des den Heißwasseraustritt aufweisenden Kolbens, der Bereich des Heißwasseraustrittes auf einen Bereich beschränkt ist, der im außenrandnahen Bereich des Kolbensbodens angeordnet ist und zwar innerhalb des unteren Drittels seines Durchmessers.

Der vorgenannte bessere Durchfeuchtungseffekt macht sich bemerkbar, weil der Heißwasseraustritt aus dem einen Kolben und dementsprechend der Heißwassereintritt in die Brühkammer auf den unteren Teil des Kolbenbodens beschränkt ist. In dem über dem Heißwasseraustritt des Kolbens befindlichen Bereich des Kolbenbodens tritt Heißwasser dagegen nicht in die Brühkammer ein. Der Heißwasserzustrom in die Brühkammer erfolgt somit ausschießlich im Bereich des unteren Drittels derselben. Es hat sich gezeigt, dass eine Durchfeuchtung des in der Brühkammer befindlichen Kaffeepulvers bei horizontal angeordneten Brühkammern, bei denen das Kaffeepulver im unteren Bereich zur Vorbereitung des Brühvorganges stärker kompaktiert ist, nicht nur besser durchfeuchtet, sondern auch besser aufgeschwemmt wird. Die Folge ist, dass das in der Brühkammer befindliche Kaffeepulver insgesamt mit einer ausreichenden Heißwassermenge in Kontakt gebracht wird und somit die Gewinnung des Kaffeearomas aus den Kaffeepulverpartikeln deutlich verbessert ist.

Der im Rahmen dieser Ausführungen benutzte Begriff Heißwasseraustritt bezieht sich, soweit nicht anders angegeben, auf den Heißwasseraustritt des einen, die Brühkammer begrenzenden Kolbens. Bezogen auf die Brühkammer ist der Heißwasseraustritt des Kolbens der Heißwassereintritt.

Eine konsequente weitere Verbesserung kann erreicht werden, wenn die Fläche des Heißwasseraustritts insbesondere weniger als 25 % der Fläche des Kolbenbodens entspricht. In einem weiteren Ausführungsbeispiel ist vorgesehen, dass die Heißwassereintrittsfläche sehr gering ist und beispielsweise weniger als 5 % und insbesondere weniger als 2,5 % der Fläche des Kolbenbodens einnimmt. Diese Fläche bildet einen zusammenhängenden Bereich des Kolbenbodens. Dieser Bereich des Kolbenbodens befindet sich in einem Winkelsegment weniger als 90 Grad, vorzugsweise weniger als 25 Grad und kann beispielsweise 15 Grad betragen. Eine Verteilung des durch diese Maßnahme quasi punktuell zugeführten Heißwassers über den Durchmesser der Brühkammer erfolgt ausschließlich innerhalb der Brühkammer selbst und nicht wie bei vorbekannten Brüheinheiten in einer durch ein Sieb von der eigentlichen Brühkammer abgetrennten Sammlerkammer, aus der das zugeführte Heißwasser beim Durchtritt durch die den Kolbenboden einnehmende Siebplatte in die Brühkammer im wesentlichen über ihre gesamte Querschnittsfläche eintritt. Das Zuführen des Hei βwassers mit einer relativ kleinen Hei βwasseraustrittsfläche bedingt, dass das Heißwasser mit einem größeren Druck in die Brühkammer eingebracht wird. Hierdurch wird der Aufschwemmprozess unterstützt. Bei horizontal angeordneten Brüheinheiten befindet sich der Heißwasseraustritt im unteren Drittel des den Heißwasseraustritt aufweisenden Kolbens und grenzt an das in der Brühkammer befindliche Kaffeepulver in einem Bereich, in dem dieses seine stärkste Kompaktierung erfahren hat. Der Druckabfall erfolgt bei einer solchen Brüheinheit innerhalb der Brühkammer, wodurch wiederum der Durchfeuchtungs- und Aufschwemmprozess des in der Brühkammer enthaltenen Kaffeepulvers unterstützt wird. Während die Heißwasserzuführung bzw. der Heißwasseraustritt dem einen Kolben der Brüheinheit zugeordnet ist, verfügt der andere Kolben über eine Auslauföffnung. Die Höhe der Auslauföffnung befindet sich oberhalb der Längsachse des Brühzylinders. Dieses ist zweckmäßig, da dann die Höhe der sich an den Kolben anschließenden Kaffeeauslaufleitung entsprechend höher angeordnet ist und somit unter den eigentlichen Kaffeeauslauf höhere Tassen abgestellt werden.

Nachfolgend ist die Erfindung anhand eines Ausführungsbeispiels unter Bezugnahme auf die beigefügten Figuren beschrieben. Es zeigen:
- **Fig. 1:**: einen Längsschnitt durch eine Brüheinheit für eine Kaffeemaschine,
- **Fig. 2:**: eine vergrößerte Querschnittsdarstellung durch die Brüheinheit der Figur 1 mit Blick auf den Kolbenboden des einen Kolbens,
- **Fig. 3:**: einen Ausschnitt aus dem Längsschnitt der Brüheinheit der Figur 1 beim Zusammenfahren der beiden Kolben zum Verdichten des in der Brühkammer befindlichen Kaffeepulvers im Laufe eines Brühzyklusses,
- **Fig. 4:**: die Darstellung der Figur 3 mit den beiden Kolben in ihrer Endstellung zum Einlassen von Heißwasser in die Brühkammer und
- **Fig. 5:**: eine Darstellung entsprechend derjenigen der Figuren 3 bzw. 4 während des Brühvorganges nachdem Heißwasser in die Brühkammer eingebracht worden ist.

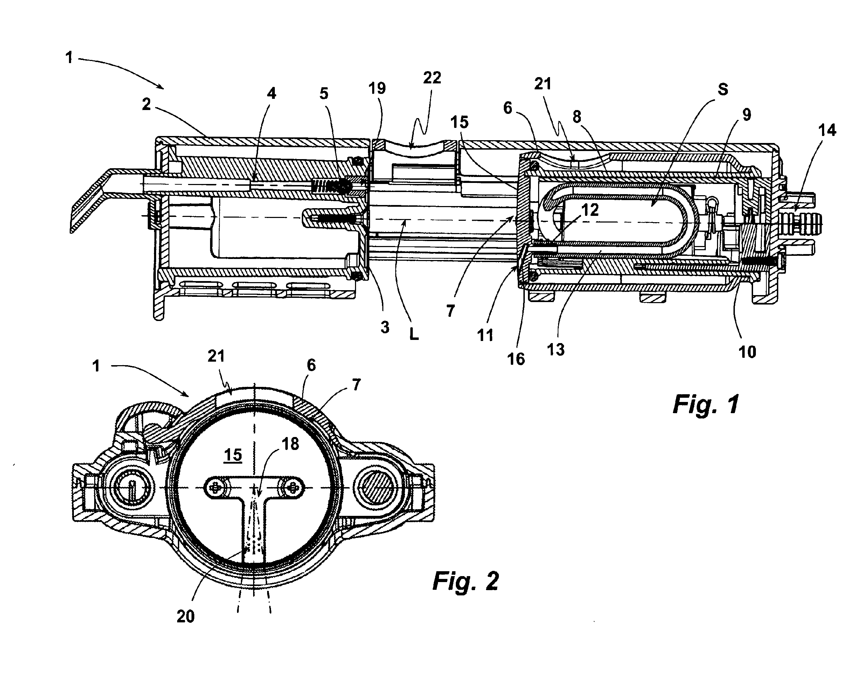

Eine Brüheinheit 1 für eine nicht näher dargestellte Kaffeemaschine verfügt über ein Gestell 2. Das Gestell 2 ist nach Art eines Gehäuses ausgebildet. An das Gestell 2 angeschlossen ist ein feststehender Kolben 3 mit einer Kaffeeauslaufleitung 4. In die Kaffeeauslaufleitung 4 ist ein Crema-Ventil 5 eingeschaltet. Teil der Brüheinheit 1 ist des Weiteren ein Brühzylinder 6. Der Brühzylinder 6 ist durch einen Spindelantrieb in längsaxialer Richtung bewegbar angetrieben. Die Längsachse der Brüheinheit 1 bzw. seines Brühzylinders 6 ist in Figur 1 mit dem Bezugszeichen L gekennzeichnet. In dem Brühzylinder 6 ist ein beweglicher Kolben 7 angeordnet, der durch den Brühzylinder 6 ebenfalls in längsaxialer Richtung bewegbar ist. Figur 1 zeigt den Brühzylinder 6 und den bewegbaren Kolben 7 in ihrer Ausgangsstellung zu Beginn eines Brühzyklusses.

Ein Führungstubus 8, der an die Rückseite des bewegbaren Kolbens 7 angeschlossen ist, bildet zusammen mit diesem eine gegenständliche Einheit. Der Führungstubus 8 ist verschiebbar auf einem feststehenden Tubus 9 geführt. Der feststehende Tubus 9 ist mit seinem rückwärtigen Ende gestellseitig festgelegt. Die Außenseite des Führungstubus 8 dient dem verkröpften rückwärtigen Endabschnitt 10 des Brühzylinders 6 als Führung. Der Führungstubus 8 ist gegenüber dem feststehenden Tubus 9 teleskopartig bewegbar. Der Durchmesser der beiden Tuben 8, 9 ist möglichst groß gewählt. Hierdurch ist die Führung des Führungstubusses 8 auf dem feststehenden Tubus 9 verbessert. Gleichzeitig erhält man hierdurch einen großvolumigen Innenraum.

Der bewegliche Kolben 7 verfügt über einen Heißwasseraustritt 11, dessen Mündung zu dem feststehenden Kolben 3 weist. An die Rückseite des beweglichen Kolbens 7 ist ein Schlauchanschluss 12 angeformt. Auf diesem sitzt ein Schlauch 13 als flexible Leitung einer Heißwasserzuführung. Der Schlauchanschluss 12 sowie der Schlauch 13 befinden sich innerhalb des Führungstubusses 8 sowie auch innerhalb des von dem feststehenden Tubus 9 eingeschlossenen Raumes. Der Schlauch 13 ist mit seinem anderen Ende an ein gestellseitig gehaltenes Kupplungsstück 14, gegebenenfalls unter Zwischenschaltung weiterer Elemente, beispielsweise eines Einlassventils angeschlossen. Das Kupplungsstück 14 dient zum Anschließen der Heißwasserzuführung der Brüheinheit 1 an die Heißwasserversorgung einer Kaffeemaschine. Innerhalb der beiden Tuben 8, 9 ist der Schlauch 13 unter Ausbildung einer Schlaufe S als Leitungsspeicher angeordnet.

Der Heißwasseraustritt 11 des Kolbens 7 befindet sich bezogen auf den Durchmesser des Kolbens 7 bzw. seines Kolbenbodens 15 im Bereich seines unteren Fünftels. Der Schlauchanschluss 12 des Kolbens 7 mündet in eine geneigt nach unten verlaufende Bohrung 16, deren Mündung an dem Kolbenboden 15 den eigentlichen Heißwasseraustritt 11 bildet. Der Heißwasseraustritt 11 ist zum Verhindern eines Eindringens von Kaffeepulver in den Heißwasseraustritt 11 und die Bohrung 16 durch eine Siebplatte 17 abgedeckt (vgl. Figur 2). Der feststehende Kolben 3 besitzt an seiner zum beweglichen Kolben 7 weisende Seite eine Siebplatte 18 mit einer sich über den gesamten Kolbenboden des Feststellungskolbens 3 erstreckenden Lochung. Der Auslauf aus dem Kolben 3 ist in Figur 1 mit dem Bezugszeichen 19 gekennzeichnet. Zwischen dem Auslauf 19 und der Siebplatte 18 befindet sich ein als Sammler dienender Hohlraum.

Figur 2 zeigt in einer vergrößerten Draufsicht den Kolbenboden 15 des beweglichen Kolbens 7 mit der daran angebrachten Siebplatte 18. Die im unteren Bereich der Siebplatte 17 vorgesehene Lochung 20 stellt den Bereich dar, in dem Heißwasser aus dem Kolben 7 in die Brühkammer eintritt. Aus der Darstellung der Figur 2 ist erkennbar, dass bei dem dargestellten Ausführungsbeispiel der Heißwasseraustritt 11 auf eine sehr kleine Fläche bezogen auf die Fläche des Kolbenbodens 15 begrenzt ist. Figur 2 zeigt die Brüheinheit 1 in ihrer horizontalen Anordnung, wie diese in einer Kaffeemaschine angeordnet ist. Damit wird aus dieser Darstellung ebenfalls deutlich, dass sich der Heißwasseraustritt 11 im unteren Fünftel bezogen auf den Durchmesser des Kolbenbodens 15 befindet. Der mit dem Bezugszeichen 20 gekennzeichnete Bereich der Siebplatte 17, in dem sich die Lochung befindet, bildet den eigentlichen Heißwasseraustritt 11. Dieser weist einen, wenn auch kleinen, Abstand zu dem unteren Abschluss des Kolbenbodens 15 bzw. des Kolbens 7 auf. Eingezeichnet ist in Figur 2 das Winkelsegment, auf das der Heißwasseraustritt 11 bzw. der gelochte Bereich der Siebplatte 17 begrenzt ist. Bei dem dargestellten Ausführungsbeispiel ist somit der Heißwasseraustritt 11 auf ein Flächensegment von etwa 15 Grad des Kolbenbodens 15 begrenzt.

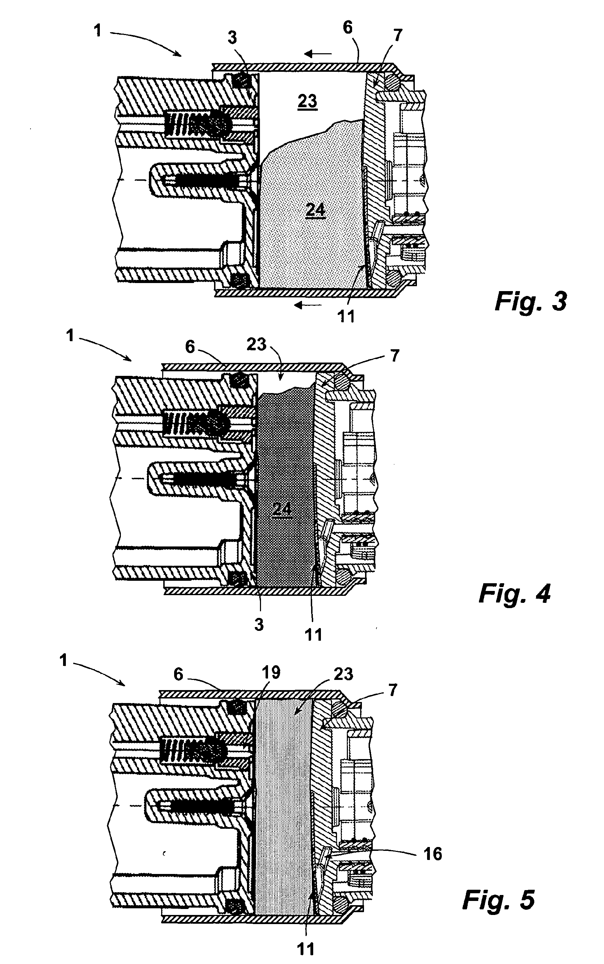

Zum Brühen eines Kaffeegetränks wird der Brühzylinder 6 in Richtung zu dem feststehenden Kolben verfahren, bis die Kaffeeeinlassöffnung 21 des Brühzylinders 6 mit der gestellseitigen Kaffeeeinlassöffnung 22 des Gestells 2 fluchtet. Nach Einbringung des Kaffeepulvers in die dann durch die beiden Kolben 3, 7 in längsaxialer Richtung begrenzte Brühkammer 23 wird der Brühzylinder 6 unter Mitnahme des beweglichen Kolbens 7 in Richtung zum feststehenden Kolben 3 verfahren. Figur 3 zeigt die sich aufeinander zu bewegenden Elemente 6, 7 der Brüheinheit 1. Bei dieser Bewegung wird das in die Brühkammer 23 eingefüllte Kaffeepulver 24 zusammengeschoben und verdichtet. Diese Bewegung endet, wenn ein bestimmter, auf den Kolben 7 wirkender Gegendruck durch das in der Brühkammer 23 befindliche Kaffeepulver bereitgestellt ist. Diese Stellung der beweglichen Elemente 6, 7 der Brüheinheit 1 ist in Figur 4 gezeigt. Figur 4 zeigt somit die Brüheinheit 1 in der Brühstellung. In die Brühkammer 23 wird sodann Heißwasser eingepumpt, welches durch den Heißwasseraustritt 11 des Kolbens 7 in die Brühkammer 23 eintritt. Eingebracht wird das Heißwasser in einem Bereich des zuvor verdichteten Kaffeepulvers 24, in dem dieses seine größte Verdichtung erfahren hat. Das mit Druck zugeführte Heißwasser dringt unter Druck stehend in das verdichtete Kaffeepulver 24 ein, durchfeuchtet dieses, schwemmt dieses auf, sodass das gesamte Kaffeepulver 24 mit Heißwasser durchfeuchtet wird. Diese aufgeschwemmte Situation des Kaffeepulvers 24 ist schematisiert in Figur 5 wiedergegeben. In Folge des unter Druck in die Brühkammer 23 eingebrachten Heißwassers wird dieses durch das in der Brühkammer 23 befindliche Kaffeepulver 24 hindurch gepresst und tritt angereichert mit dem aus dem Kaffeepulverpartikeln gewonnenen Aroma über den Auslauf 19 in die Auslaufleitung 4 ein und wird einem Trinkgefäß zugeführt (letzteres nicht dargestellt). Der beschriebe Brühzyklus ist beendet, wenn die vorgegebene Heißwassermenge durch die Brühkammer 23 hindurchgepresst worden ist. Anschließend wird das ausgelaugte Kaffeepulver 24 aus dem Brühzylinder 6 entfernt und die beweglichen Elemente der Brüheinheit 1 wieder in ihre in Figur 1 gezeigte Ausgangsstellung gefahren.

Die zum Betreiben der Brüheinheit notwendigen Aggregate sind Teil der in den Figuren nicht dargestellten Kaffeemaschine.

Die Brüheinheit ist in diese mit einer eindimensionalen horizontalen Montagebewegung in diese einsetzbar und mit einer entsprechend umgekehrten Bewegung aus dieser entfernbar.

Die Beschreibung der Erfindung macht deutlich, dass mit letztendlich einfachen Mitteln auf wirkungsvolle Art und Weise die Aromagewinnung beim Brühvorgang einer horizontal in einer Kaffeemaschine angeordneten Brüheinheit deutlich verbessert ist.

### Bezugszeichenliste

- 1: Brüheinheit
- 2: Gestell
- 3: feststehender Kolben
- 4: Kaffeeauslaufleitung
- 5: Crema-Ventil
- 6: Brühzylinder
- 7: beweglicher Kolben
- 8: Führungstubus
- 9: feststehender Tubus
- 10: Endabschnitt
- 11: Heißwasseraustritt
- 12: Schlauchanschluss
- 13: Schlauch
- 14: Kupplungsstück
- 15: Kolbenboden
- 16: Bohrung
- 17: Siebplatte
- 18: Siebplatte
- 19: Auslauf
- 20: Lochung
- 21: Kaffeeeinlassöffnung des Brühzylinder
- 22: Kaffeeeinlassöffnung des Gestells
- 23: Brühkammer
- 24: Kaffeepulver

- S: Schlaufe
- L: Längsachse

## Patentansprüche

1. Brüheinheit für eine Kaffeemaschine mit einem Brühzylinder (6) und zwei innerhalb des Brühzylinders (6) in der Brühstellung der beweglichen Elemente der Brüheinheit (1) eine Brühkammer (23) begrenzenden Kolben (3, 7), wobei einer der beiden Kolben (7) einen Heißwasseraustritt (11) zum Einbringen von Heißwasser in die Brühkammer (23) und der andere einen Auslauf (19) aufweist, **dadurch gekennzeichnet, dass** der Heißwasseraustritt (11) des einen Kolbens (7) dergestalt angeordnet ist, dass bei horizontaler Anordnung der Brüheinheit in der Kaffeemaschine ein Wassereintritt in die vor dem Kolben (7) befindliche Brühkammer (23) ausschließlich in einem Bereich erfolgt, der sich, bezogen auf den Durchmesser des Kolbenbodens (15) des den Heißwasseraustritt (11) aufweisenden Kolbens (7), in einem Außenrand nahen Abschnitt, ausgehend von dem äußeren Rand des Kolbenbodens (15), im unteren Drittel seines Durchmessers, begrenzt auf die Höhe des unteren Drittels des Durchmessers, befindet.

2. Brüheinheit nach Anspruch 1, **dadurch gekennzeichnet, dass** die Fläche des Hei βwasseraustritts (11) weniger als 25 % der Fläche des Kolbenbodens (15) einnimmt.

3. Brüheinheit nach Anspruch 2, **dadurch gekennzeichnet, dass** der Heißwasseraustritt (11) auf eine Fläche von weniger als 5 %, insbesondere weniger als 2,5 %, der Fläche des Kolbenbodens (15) beschränkt ist und dieser Bereich im unteren Fünftel bezogen auf den Durchmesser des Kolbenbodens (15) angeordnet ist.

4. Brüheinheit nach einem der Ansprüche 1 bis 3, **dadurch gekennzeichnet, dass** der Heißwasseraustritt (11) innerhalb eines Winkelsegmentes des Kolbenbodens (15), dass kleiner als 90 Grad ist, angeordnet ist.

5. Brüheinheit nach Anspruch 4, **dadurch gekennzeichnet, dass** das Winkelsegment kleiner als 25 Grad, insbesondere etwa 15 Grad beträgt, innerhalb dem die Fläche des Heißwasseraustrittes (11) angeordnet ist.

6. Brüheinheit nach einem der Ansprüche 1 bis 5, **dadurch gekennzeichnet, dass** der Auslauf (19) des anderen, die Brühkammer (23) begrenzenden Kolbens (3) der Längsachse des Brühzylinders (6) gegenüberliegend zu dem Heißwasseraustritt (11) des Kolbens (7) angeordnet ist.

7. Brüheinheit nach Anspruch 5, **dadurch gekennzeichnet, dass** die Achse des Auslaufes (19) ausgehend von äußeren Rand des Kolbens (3) mit etwa dem halben Radius des Kolbens von dem Rand beabstandet ist.

8. Kaffeemaschine mit einer Brüheinheit nach einem der Ansprüche 1 bis 7, **dadurch gekennzeichnet, dass** die Brüheinheit (1) mit der Längsachse des Brühzylinders (6) horizontal oder annähernd horizontal ausgerichtet in der Kaffeemaschine angeordnet ist, wobei der Heißwasseraustritt (11) des Kolbens (7) unterhalb der Längsachse des Brühzylinders (6) angeordnet ist.

9. Kaffeemaschine nach Anspruch 8, **dadurch gekennzeichnet, dass** die Brüheinheit (1) durch eine horizontale Montagebewegung in die Kaffeemaschine einsetzbar und in umgekehrter Richtung aus dieser herausnehmbar ist.

## Claims

1. Brewing unit for a coffee machine with a brewing cylinder (6) and two pistons (3, 7) which limit a brewing chamber (23) within the brewing cylinder (6) in the brewing position of the movable elements of the brewing unit (1), wherein one of the two pistons (7) has a hot water outlet (11) for introducing hot water into the brewing chamber (23) and the other one has an outflow (19), **characterised in that** the hot water outlet (11) of the one piston (7) is arranged such that, with the brewing unit arranged horizontally in the coffee machine, a water entrance only takes place in an area of the brewing chamber (23) located before the piston (7), which is located in a section near the outer edge, relative to the diameter of the piston head (15) of the piston (7) having a hot water outlet (11), going out from the outside edge of the piston head (15), in the lower third of its diameter limited on the height of the lower third of the diameter.

2. Brewing unit according to claim 1, **characterised in that** the surface of the hot water outlet (11) takes up less than 25% of the surface of the piston head (15).

3. Brewing unit according to claim 2, **characterised in that** the hot water outlet (11) is limited to a surface of less than 5%, especially less than 2.5%, of the surface of the piston head (15) and this area is arranged in the lower fifth related to the diameter of the piston head (15).

4. Brewing unit according to any one of claims 1 to 3, **characterised in that** the hot water outlet (11) is arranged within an angular segment, of the piston head (15), which is smaller than 90 degrees.

5. Brewing unit according to claim 4, **characterised in that** the angular segment is smaller than 25 degrees, especially about 15 degrees, within which the surface of the hot water outlet (11) is arranged.

6. Brewing unit according to any one of claims 1 to 5, **characterised in that** the outflow (19) of the other piston (3), which limits the brewing chamber (23), of the longitudinal axis of the brewing cylinder (6) is arranged opposite the hot water outlet (11) of the piston (7).

7. Brewing unit according to claim 5, **characterised in that** the axis of the outflow (19), going out from the outside edge of the piston (3), is distanced from the edge by about half the radius of the piston.

8. Coffee machine with a brewing unit according to any one of claims 1 to 7, **characterised in that** the brewing unit (1) is arranged in the coffee machine, in horizontal or near horizontal alignment, with the longitudinal axis of the brewing cylinder (6), wherein the hot water outlet (11) of the piston (7) is arranged underneath the longitudinal axis of the brewing cylinder (6).

9. Coffee machine according to claim 8, **characterised in that** the brewing unit (1) can be inserted, by a horizontal assembly movement, into the coffee machine and removed from it in the opposite direction.

## Revendications

1. Unité d'échaudage pour une machine à café comprenant un cylindre d'échaudage (6) et, à l'intérieur du cylindre d'échaudage (6), deux pistons (3, 7) délimitant la chambre d'échaudage (23) dans la position d'échaudage des éléments mobiles de l'unité d'échaudage (1), l'un des deux pistons (7) présentant une sortie d'eau chaude (11) destinée à introduire de l'eau chaude dans la chambre d'échaudage (23) et l'autre, un écoulement (19), **caractérisée en ce que** la sortie d'eau chaude (11) de l'un des pistons (7) est disposée de telle manière qu'en cas de disposition horizontale de l'unité d'échaudage dans la machine à café, une pénétration de l'eau dans la chambre d'échaudage (23) se trouvant devant le piston (7) s'effectue exclusivement dans une zone, qui, par rapport au diamètre du fond (15) du piston (7) muni de la sortie d'eau chaude (11), se trouve dans un tronçon proche du bord extérieur, partant du bord externe du fond du piston (15), dans le tiers inférieur de son diamètre, limité à la hauteur du tiers inférieur du diamètre.

2. Unité d'échaudage selon la revendication 1, **caractérisée en ce que** la surface de la sortie d'eau chaude (11) occupe moins de 25 % de la surface du fond du piston (15).

3. Unité d'échaudage selon la revendication 2, **caractérisée en ce que** la sortie d'eau chaude (11) est limitée à une surface de moins de 5 %, plus particulièrement de moins de 2,5 % de la surface du fond du piston (15) et que cette zone est disposée dans le cinquième inférieur par rapport au diamètre du fond du piston (15).

4. Unité d'échaudage selon l'une des revendications 1 à 3, **caractérisée en ce que** la sortie d'eau chaude (11) est disposée à l'intérieur d'un segment angulaire du fond du piston (15) qui est inférieur à 90 degrés.

5. Unité d'échaudage selon la revendication 4, **caractérisée en ce que** le segment angulaire est inférieur à 25 degrés, plus particulièrement à 15 degrés environ, à l'intérieur duquel est disposée la surface d'une sortie d'eau chaude (11).

6. Unité d'échaudage selon l'une des revendications 1 à 5, **caractérisée en ce que** l'écoulement (19) de l'autre piston (3) délimitant la chambre d'échaudage (23), est disposé à l'opposé de l'axe longitudinal du cylindre d'échaudage (6), vers la sortie d'eau chaude (11) du piston (7).

7. Unité d'échaudage selon la revendication 5, **caractérisée en ce que** l'axe de l'écoulement (19) partant du bord extérieur du piston (3) est écarté du bord d'environ une moitié de rayon de piston.

8. Machine à café dotée d'une unité d'échaudage selon l'une des revendications 1 à 7, **caractérisée en ce que** l'unité d'échaudage (1) est orientée avec l'axe longitudinal du cylindre d'échaudage (6) à l'horizontale ou sensiblement à l'horizontale dans la machine à café, la sortie d'eau chaude (11) du piston (7) étant disposée sous l'axe longitudinal du cylindre d'échaudage (6).

9. Machine à café selon la revendication 8, **caractérisée en ce que** l'unité d'échaudage (1) peut être engagée par un mouvement de montage horizontal dans la machine à café et peut être extraite de cette dernière en sens inverse.
